(19) Europäisches Patentamt
European Patent Office
Office européen des brevets

(11) **EP 4 164 147 A1**

(12) **EUROPEAN PATENT APPLICATION**
published in accordance with Art. 153(4) EPC

(43) Date of publication:
**12.04.2023 Bulletin 2023/15**

(21) Application number: **21864517.4**

(22) Date of filing: **07.07.2021**

(51) International Patent Classification (IPC):
*H04B 17/345* (2015.01)      *H04L 5/00* (2006.01)
*H04W 92/20* (2009.01)      *H04W 84/04* (2009.01)

(52) Cooperative Patent Classification (CPC):
**H04B 17/345; H04L 5/00; H04W 84/04;
H04W 92/20**

(86) International application number:
**PCT/KR2021/008636**

(87) International publication number:
**WO 2022/050554 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **07.09.2020   KR 20200114128
13.01.2021   KR 20210004524**

(71) Applicant: **Samsung Electronics Co., Ltd.
Gyeonggi-do 16677 (KR)**

(72) Inventors:
• **KIM, Youngjoon**
  **Suwon-si, Gyeonggi-do 16677 (KR)**
• **LEE, Kwonjong**
  **Suwon-si, Gyeonggi-do 16677 (KR)**
• **LEE, Hyojin**
  **Suwon-si, Gyeonggi-do 16677 (KR)**
• **LEE, Juho**
  **Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD AND APPARATUS FOR MEASURING INTERFERENCE IN WIRELESS COMMUNICATION SYSTEM**

(57)    The present disclosure relates to a 5G or 6G communication system for supporting a higher data transmission rate than a 4G communication system such as LTE. The present disclosure provides a method for measuring self-interference by a first node and an apparatus for performing same, the method comprising the steps of: acquiring self-interference channel measurement configuration; transmitting a measurement signal for self-interference measurement on the basis of the self-interference channel measurement configuration; and on the basis of the self-interference channel measurement configuration, measuring the self-interference that occurs, by means of the measurement signal for the self-interference channel measurement.

# FIG. 10

UE
(1000)

IAB-node
(1002)

IAB-donor
(1004)

SI channel measurement configuration
- SI measurement time/freq. resource
- SI measurement indicator
(1020)

SI channel measurement indication requrest
- SI measurement time/freq. resource
(1022)

SI channel measurement indication
- SI measurement time/freq. resource
- SI measurement indicator
(1024)

1040

DU-to-MT
SI channel
measurement

1042

ZP-CSI-RS
or
Muting

SI transmission
(1026)

## Description

### [Technical Field]

The disclosure relates to a method and device for measuring interference in a wireless communication system. Further, the disclosure relates to a method and device for measuring self-interference during a full duplex operation of an integrated access backhaul (IAB) in a wireless communication system.

### [Background Art]

Looking back at the evolution of wireless communication generations, technologies for human services, such as voice, multimedia, and data, have been developed. After the commercialization of 5th-generation (5G) communication systems, it is expected that the explosive growth of connected devices will be connected to communication networks. Examples of objects connected to the network may include vehicles, robots, drones, home appliances, displays, smart sensors installed in various infrastructures, construction machinery, and factory equipment. Mobile devices are expected to evolve into various form factors such as augmented reality glasses, virtual reality headsets, and hologram devices. In the 6th-generation (6G) era, in order to provide various services by connecting hundreds of billions of devices and objects, efforts are being made to develop an improved 6G communication system. For this reason, the 6G communication system is referred to as a beyond 5G communication.

In the 6G communication system expected to be realized around 2030, the maximum transmission speed is tera (i.e., 1,000 gigabytes) bps, and a wireless delay time is 100 microseconds ($\mu$sec). That is, a transmission speed in the 6G communication system is 50 times faster than that in the 5G communication system and a wireless delay time thereof is reduced to 1/10.

To achieve such high data rates and ultra-low latency, the 6G communication system is being considered for implementation in a terahertz band (e.g., 95 gigahertz (95 GHz) to 3 terahertz (3 THz) band). In the terahertz band, it is expected that the importance of technology that can ensure signal reach, that is, coverage, will increase due to more serious path loss and atmospheric absorption compared to a mmWave band introduced in 5G. As main technologies for ensuring coverage, multi-antenna transmission technologies such as radio frequency (RF) elements, antennas, new waveforms better in terms of coverage than orthogonal frequency division multiplexing (OFDM), beamforming, and massive multiple-input and multiple-output (MIMO), full dimensional MIMO (FD-MIMO), array antenna, and large scale antenna should be developed. Further, in order to improve coverage of terahertz band signals, new technologies such as metamaterial-based lenses and antennas, high-dimensional spatial multiplexing technology using orbital angular momentum (OAM), and reconfigurable intelligent surface (RIS) are being discussed.

Further, in order to improve frequency efficiency and system network, in the 6G communication system, development of full duplex technology in which uplink and downlink simultaneously utilize the same frequency resource at the same time, network technology that integrates satellite and high-altitude platform stations (HAPS), network structure innovation technology that supports mobile base stations and that enables network operation optimization and automation, dynamic frequency sharing technology through collision avoidance based on spectrum use prediction, artificial intelligence (AI)-based communication technology that utilizes AI from a design stage and internalizes end-to-end AI support functions to realize system optimization, and next-generation distributed computing technology that realizes complex services that exceed the limits of UE computing capabilities by utilizing ultrahigh performance communication and computing resources (mobile edge computing (MEC), cloud, and the like) is being made. Further, through the design of a new protocol to be used in the 6G communication system, the implementation of a hardware-based security environment, the development of mechanisms for safe use of data, and the development of technology on a method for maintaining privacy, attempts to further strengthen connectivity between devices, to further optimize networks, to promote softwareization of network entities, and to increase the openness of wireless communications are continuing.

Due to the research and development of such 6G communication systems, it is expected that a new level of next hyper-connected experience will be possible through the hyper-connectivity of the 6G communication system including not only connections between objects but also connections between people and objects. Specifically, it is expected that services such as truly immersive extended reality (XR), high-fidelity mobile hologram, and digital replica will be available through the 6G communication system. Further, as a service such as remote surgery, industrial automation and emergency response through security and reliability enhancement is provided through 6G communication systems, it will be applied in various fields such as industry, medical care, automobiles, and home appliances.

**[Disclosure of Invention]**

**[Technical Problem]**

Various embodiments of the disclosure provide an improved method and device for measuring interference in a wireless communication system. Further, various embodiments of the disclosure provide a method and device for measuring self-interference during a full duplex communication operation of an integrated access backhaul in a wireless communication system.

**[Solution to Problem]**

According to an embodiment of the disclosure, a method performed by a first node for measuring self-interference may include acquiring a self-interference channel measurement configuration; transmitting a measurement signal for measuring self-interference based on the self-interference channel measurement configuration; and measuring the self-interference generated by the measurement signal for measuring the self-interference channel based on the self-interference channel measurement configuration.

Further, according to an embodiment of the disclosure, a first node for self-interference measurement may include a transceiver; and a controller configured to control to acquire a self-interference channel measurement configuration, to transmit a measurement signal for self-interference measurement based on the self-interference channel measurement configuration, and to measure the self-interference generated by a measurement signal for self-interference channel measurement based on the self-interference channel measurement configuration.

**[Advantageous Effects of Invention]**

According to various embodiments of the disclosure, an improved method and device for measuring interference in a wireless communication system can be provided. Further, according to various embodiments of the disclosure, a method and device for measuring self-interference during a full duplex operation of an integrated access backhaul in a wireless communication system can be provided.

**[Brief Description of Drawings]**

FIG. 1 is a diagram illustrating a basic structure of a time-frequency domain, which is a radio resource domain of an LTE system according to various embodiments of the disclosure.
FIG. 2 is a diagram illustrating a physical downlink control channel (PDCCH) through which downlink control information (DCI) of an LTE system is transmitted according to various embodiments of the disclosure.
FIG. 3 is a diagram illustrating an example of a basic unit of time resources and frequency resources constituting a downlink control channel that may be used in a 5G system according to various embodiments of the disclosure.
FIG. 4 is a diagram illustrating an example of a control resource set in which a downlink control channel is transmitted in a 5G system according to various embodiments of the disclosure.
FIG. 5 is a diagram illustrating an example of data transmission using a demodulation reference signal (DMRS) according to various embodiments of the disclosure.
FIG. 6A is a block diagram illustrating a basic structure of a transceiver of a full duplex communication system according to various embodiments of the disclosure.
FIG. 6B is a diagram illustrating a network composed of one or more objects connected to a core network, objects connected to the object in a hierarchical structure, and a UE according to various embodiments of the disclosure.
FIG. 7 is a diagram illustrating an example in which an IAB-node performs communication with an IAB-donor and a UE using the same time-frequency resource and full duplex communication according to various embodiments of the disclosure.
FIG. 8 is a diagram illustrating an example in which an IAB-distributed unit (DU) performs downlink communication with a UE using the same time-frequency resource while an IAB-donor performs downlink communication with an IAB-mobile termination (IAB-MT) according to various embodiments of the disclosure.
FIG. 9 is a diagram illustrating an example in which a UE performs uplink communication with an IAB-DU using the same time-frequency resource while an IAB-MT performs uplink communication with an IAB-donor according to various embodiments of the disclosure.
FIG. 10 is a message flow diagram illustrating an example of a downlink self-interference measurement process of a single-hop IAB node according to various embodiments of the disclosure.

FIG. 11 is a message flow diagram illustrating an example of a downlink self-interference measurement process of a multi-hop IAB node according to various embodiments of the disclosure.

FIG. 12 is a message flow diagram illustrating an example of a downlink self-interference measurement process in the case that a plurality of IAB-nodes are connected to one IAB-donor according to various embodiments of the disclosure.

FIG. 13 is a message flow diagram illustrating an example of a process of measuring downlink self-interference in a distributed method between a plurality of IAB-nodes according to various embodiments of the disclosure.

FIG. 14 is a flowchart illustrating an operation of a node performing a self-interference channel measurement operation according to various embodiments of the disclosure.

FIG. 15 is a block diagram illustrating a terminal and a base station device according to various embodiments of the disclosure.


**[Mode for the Invention]**


A wireless communication system has evolved from providing voice-oriented services in the early days to a broadband wireless communication system that provides high-speed and high-quality packet data services as in communication standards such as high speed packet access (HSPA), long term evolution (LTE) or evolved universal terrestrial radio access (E-UTRA), LTE-Advanced (LTE-A), and LTE-Pro of 3GPP, high rate packet data (HRPD) and ultra mobile broadband (UMB) of 3GPP2, and IEEE 802.16e.

LTE and NR systems, which are a representative example of the broadband wireless communication system, employ an orthogonal frequency division multiplexing (OFDM) scheme (or cyclic prefix based orthogonal frequency division multiplex (CP-OFDM) scheme) in downlink (DL) and a single carrier frequency division multiple access (SC-FDMA) scheme (or discrete Fourier transform spread OFDM (DFT-s-OFDM) scheme) or CP-OFDM scheme in an uplink. The uplink means a radio link that a terminal (user equipment (UE) or mobile station (MS)) transmits data or control signals to a base station (a generation node B (gNB), an eNode B (eNB), or a base station (BS) is a node capable of allocating radio resources to a plurality of terminals, and radio access technology supported by the base station is not limited), and the downlink means a radio link in which a base station transmits data or control signals to a terminal. The above-mentioned multiple access method enables data or control information of each user to distinguish by allocating and operating data or control information so that time-frequency resources to carry data or control information for each user in general do not overlap each other, that is, so that orthogonality is established.

A 5G communication system, which is a future communication system after LTE, should support services that simultaneously satisfy various requirements so that various requirements of users and service operators may be freely reflected. Services considered for the 5G communication system include enhanced mobile broadband (eMBB), massive machine type communication (mMTC), ultra reliability low latency communication (URLLC), and the like.

In a general wireless communication system, a specific spectrum resource (hereinafter, may be used interchangeably with a frequency resource) is exclusively allocated for a specific service. Representatively, in the case of cellular communication, a country leases a specific spectrum resource to a specific mobile communication operator, and a mobile communication operator to which the resource is allocated maintains a cellular network exclusively using the resource. However, resources are being wasted because the spectrum allocated to each mobile communication operator is not fully utilized, except for spatiotemporal situations in which data traffic is very high.

In order to solve such a situation, a situation in which dynamic frequency sharing between mobile communication operators is possible may be considered. A spectrum resource having a right to use first may be allocated to each operator, but when a use amount of the resource is low, permission to use the resource may be granted to other operators. In the above scenario, operators do not need to allocate unnecessarily large amounts of spectrum in order to cope with peak traffic situations. Therefore, a dynamic frequency sharing system between operators will be a base technology for 6G or 5G communication systems that can efficiently manage increasingly scarce spectrum resources.

Prior to describing the details, a frame structure of LTE and LTE-A systems will be described in more detail with reference to drawings. The following resource structure illustrates a resource structure of LTE and LTE-A systems, but a similar resource structure may be applied to 5G or other communication systems.

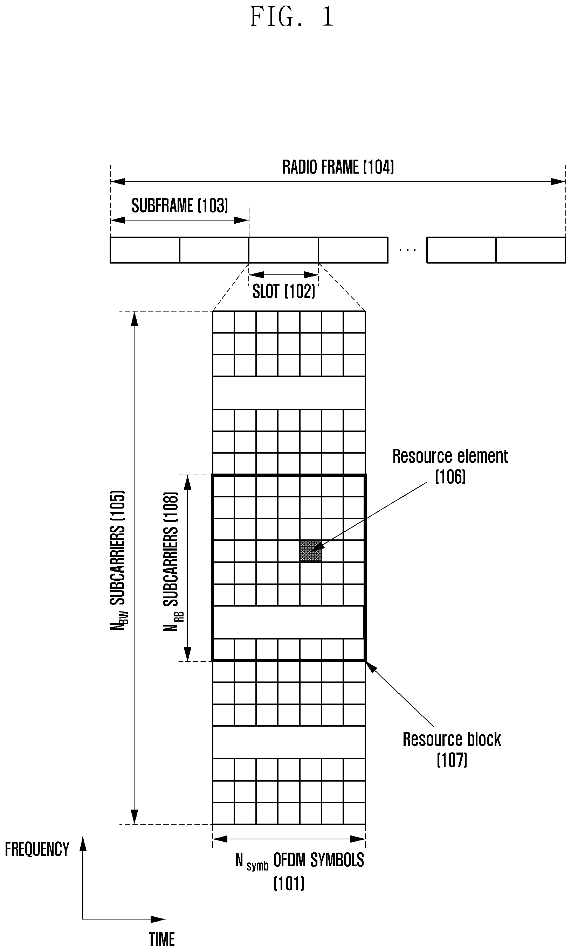

FIG. 1 is a diagram illustrating a basic structure of a time-frequency domain, which is a radio resource domain of an LTE system according to various embodiments of the disclosure. In FIG. 1, a horizontal axis represents a time domain and a vertical axis represents a frequency domain. The minimum transmission unit in the time domain is an OFDM symbol, and the $N_{symb}$ number of OFDM symbols 101 are gathered to form one slot 102, and two slots are gathered to form one subframe 103. A length of the slot 102 is 0.5ms, and a length of the subframe 103 is 1.0ms. A radio frame 104 is a time domain unit consisting of 10 subframes. The minimum transmission unit in the frequency domain is a subcarrier, and a bandwidth of the entire system transmission band is composed of the total $N_{BW}$ number of subcarriers 105. A basic unit of resources in the time-frequency domain is a resource element (RE) 106, which may be represented by an OFDM symbol index and a subcarrier index. A resource block (RB) 107 or a physical resource block (PRB) is defined as the $N_{symb}$ number of consecutive OFDM symbols 101 in the time domain and the $N_{RB}$ number of consecutive subcarriers 108 in the frequency domain. Accordingly, one RB 108 is composed of the $N_{symb} \times N_{RB}$ number of REs 106. In general, the minimum transmission unit of data is the RB unit, and in an LTE system, in general, $N_{symb} = 7$ and $N_{RB} = 12$, and $N_{BW}$ is proportional to the bandwidth of the system transmission band.

Hereinafter, downlink control information (DCI) in LTE and LTE-A systems will be described in detail.

In the LTE system, scheduling information on downlink data or uplink data is transmitted from a base station to a UE through DCI. DCI is defined in various formats, and a determined DCI format is applied according to whether it is scheduling information on uplink data or scheduling information on downlink data, whether it is compact DCI with a small size of control information, whether spatial multiplexing using multiple antennas is applied, or whether it is DCI for power control. For example, a DCI format 1, which is scheduling control information on downlink data includes at least the following control information.

- Resource allocation type 0/1 flag: Notifies whether the resource allocation method is a type 0 or a type 1. The type 0 allocates resources in units of resource block groups (RBGs) by applying a bitmap method. A basic unit of scheduling in the LTE system is an RB represented by time resources and resource domain resources, and an RBG is composed of a plurality of RBs to become a basic unit of scheduling in the type 0 scheme. The type 1 enables a specific RB to be allocated inside an RBG.
- Resource block assignment: Notifies RBs allocated to data transmission. A resource to be expressed is determined according to the system bandwidth and resource allocation method.
- Modulation and coding scheme (MCS): Notifies a modulation scheme used for data transmission and a size of a transport block, which is data to be transmitted.
- Hybrid automatic repeat request (HARQ) process number: Notifies the process number of HARQ.
- New data indicator: Notifies whether it is HARQ initial transmission or retransmission.
- Redundancy version: Notifies the redundancy version of HARQ.
- Transmit power control (TPC) command for a physical uplink control channel (PUCCH): Notifies a transmit power control command for a PUCCH, which is an uplink control channel.

The DCI is transmitted through a PDCCH, which is a downlink physical control channel through channel coding and modulation processes. A cyclic redundancy identify (CRC) is attached to a DCI message payload, and the CRC is scrambled with a UE identifier (e.g., cell-radio network temporary identifier (C-RNTI)) corresponding to the identity of the UE. Different radio network temporary identifiers (RNTIs) are used according to a purpose of the DCI message, for example, according to UE-specific data transmission, a power control command, or a random access response (RAR), and the like. That is, the RNTI is not explicitly transmitted, but is included in the CRC calculation process and transmitted. Upon receiving the DCI message transmitted on the PDCCH, the UE may identify a CRC using the assigned RNTI, and if the CRC identification result is correct, it can be seen that the corresponding message has been transmitted to the UE.

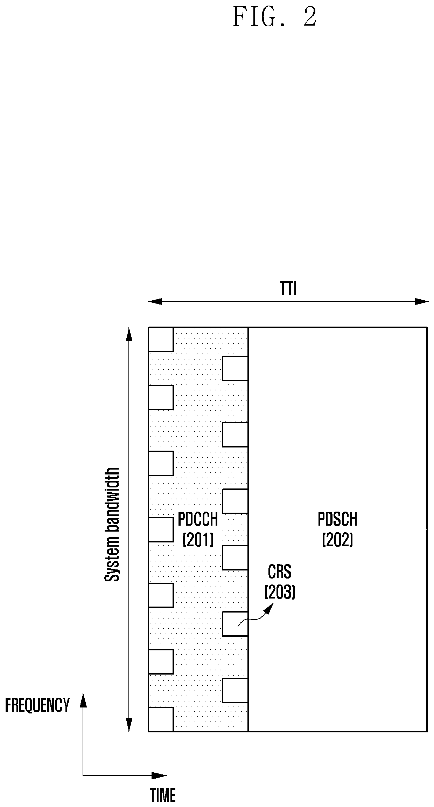

FIG. 2 is a diagram illustrating a PDCCH 201, which is a downlink physical channel through which DCI of an LTE system is transmitted according to various embodiments of the disclosure. With reference to FIG. 2, a PDCCH 201 is time multiplexed with a physical downlink shared channel (PDSCH) 202, which is a data transmission channel and is transmitted over the entire system bandwidth. An area of the PDCCH 201 is represented by the number of OFDM symbols, which is indicated to the UE by a control format indicator (CFI) transmitted through a physical control format indicator channel (PCFICH). By allocating the PDCCH 201 to an OFDM symbol coming at a front portion of the subframe, the UE may enable to decode DCI allocating downlink scheduling as quickly as possible; thus, there is an advantage of being able to reduce the decoding delay, that is, the overall downlink transmission delay for the PDSCH (or downlink shared channel (DL-SCH)). Because one PDCCH carries one DCI message and a plurality of UEs may be simultaneously scheduled through a downlink and uplink, a plurality of PDCCHs are simultaneously transmitted in each cell.

A cell-specific RS (CRS) 203 is used as a reference signal (RS) for decoding the PDCCH 201. The CRS 203 is transmitted every subframe over all bands, and scrambling and resource mapping vary according to a cell identity (ID) (e.g., physical cell ID (PCI)). Because the CRS 203 is a reference signal commonly used by all UEs, UE-specific beamforming cannot be used. Therefore, the multi-antenna transmission technique for the PDCCH of the LTE system is limited to open-loop transmit diversity. The number of ports of the CRS is implicitly known to the UE from decoding of a physical broadcast channel (PBCH).

Resource allocation of the PDCCH 201 is performed based on a control-channel element (CCE), and one CCE is composed of 9 resource element groups (REGs), that is, total 36 REs (one REG is composed of 4 REs). The number of CCEs necessary for a specific PDCCH 201 may be 1, 2, 4 or 8, which varies according to a channel coding rate of a DCI message payload. In this way, different numbers of CCEs are used for implementing link adaptation of the PDCCH 201. The UE should detect a signal without knowing information on the PDCCH 201, and in the LTE system, a search space representing a set of CCEs is defined for such blind decoding. The search space is composed of a plurality of sets in an aggregation level (AL) of each CCE, which is not explicitly signaled but may be implicitly defined through a function and subframe number by the UE identity. Within each subframe, the UE decodes the PDCCH 201 for all possible resource candidates that may be created from CCEs within the configured search space, and processes information declared valid for the corresponding UE through CRC identification.

The search space is classified into a UE-specific search space and a common search space. Because the UE-specific search space is implicitly defined through a function and subframe number by the UE identity without being explicitly signaled, the UE-specific search space may change according to the subframe number, which means that a search space may be changed over time. Thereby, the problem (defined as a blocking problem) that a specific UE cannot use a search space by other UEs among UEs may be solved. Because all CCEs for which a UE searches are already being used by other UEs scheduled in the same subframe, when any UE is not be scheduled in a corresponding subframe, such a search space changes over time; thus, such a problem may not occur in the next subframe. For example, even if parts of the UE-specific search spaces of a UE#1 and a UE#2 overlap in a specific subframe, a UE-specific search space changes for each subframe; thus, it may be expected that the overlap in the next subframe is different from this.

In the case of a common search space, because a certain group of UEs or all UEs should receive a PDCCH, it is defined as a pre-promised set of CCEs. That is, the common search space does not change according to the identity of the UE or the subframe number. In order to receive cell common control information such as paging messages or dynamic scheduling for system information, a certain group of UEs or all UEs may search for the common search space of the PDCCH 201. For example, the UE may search for the common search space of the PDCCH 201 to receive scheduling allocation information of a DL-SCH for transmission of system information block (SIB)-1 including cell operator information. Further, although the common search space exists for transmission of various system messages, it may also be used for transmitting control information of an individual UE. Thereby, the common search space may be used as a solution to a phenomenon in which a UE does not receive scheduling due to lack of available resources in the UE-specific search space.

A search space for an LTE PDCCH is defined as illustrated in Table 1.

[Table 1]

The set of PDCCH candidates to monitor are defined in terms of search spaces, where a search space $S_k^{(L)}$ at aggregation level $L \subset \{1, 2, 4, 8\}$ is defined by a set of PDCCH candidates. For each serving cell on which PDCCH is monitored, the CCEs corresponding to PDCCH candidate $m$ of the search space $S_k^{(L)}$ are given by

$$L\{(Y_k + m') \bmod \lfloor N_{CCE,k}/L \rfloor\} + i$$

where $Y_k$ is defined below, $i$-0,...,$L$-1. For the common search space m'=m. For the PDCCH UE specific search space, for the serving cell on which PDCCH is monitored, if the monitoring UE is configured with carrier indicator field then

$m'$-$m$+$M^{(L)} \cdot n_{CI}$ where $n_{CI}$ is the carrier indicator field value, else if the monitoring UE is not configured with carrier indicator field then m'=m, where $m$-0,...$M^{(L)}$ -1 _$M^{(L)}$ is the number of PDCCH candidates to monitor in the given search space. Note that the carrier indicator field value is the same as ServCellIndex

For the common search spaces, $Y_k$ is set to 0 for the two aggregation levels L=4 and L=8.

For the UE-specific search space $S_k^{(L)}$ at aggregation level L, the variable $Y_k$ is defined by

$$Y_k = (A \cdot Y_{k-1}) \bmod D$$

where $Y_{-1}$ -$n_{RNTI} \neq 0$, A=39827, D=65537 and $k = \lfloor n_s/2 \rfloor$, $n_s$ is the slot number within a radio frame.

The RNTI value used for $n_{RNTI}$ is defined in subclause 7.1 in downlink and subclause 8 in uplink.

In the LTE system, a UE has a plurality of search spaces according to each AL. The number of PDCCH candidates to be monitored by the UE within the search space defined according to the AL in the LTE system is defined in Table 2.

[Table 2]

| Search space $S_k'^{(L)}$ | | | Number of PDCCH candidates $M^{(L)}$ |
|---|---|---|---|
| Type | Aggregation level L | Size (in CCEs) | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

According to Table 1, in the case of a UE-specific search space, AL {1, 2, 4, 8} is supported, and in this case, {6, 6, 2, 2} number of PDCCH candidates are respectively provided. In the case of a common search space 302, AL {4, 8} is supported, and in this case, {4, 2} number of PDCCH candidates are respectively provided. The reason why the AL supports only {4, 8} in the common search space is to improve coverage characteristics because system messages generally have to reach the edge of a cell.

DCI transmitted to the common search space is defined only for a specific DCI format such as 0, 1A, 3, 3A, or 1C corresponding to usage such as system message or power control for a UE group. A DCI format with spatial multiplexing is not supported within the common search space. A downlink DCI format to be decoded in the UE-specific search space is changed according to a transmission mode configured for the corresponding UE. Because a configuration of the transmission mode is performed through radio resource control (RRC) signaling, the accurate subframe number for when the configuration takes effect for the corresponding UE is not designated. Therefore, the UE may operate while maintaining a connected state by always performing decoding for a DCI format 1A regardless of the transmission mode.

In the above description, a method of transmitting and receiving a downlink control channel and downlink control information in LTE and LTE-A and a search space have been described. In the following description, a downlink control channel in a 5G communication system will be described in more detail with reference to the drawings.

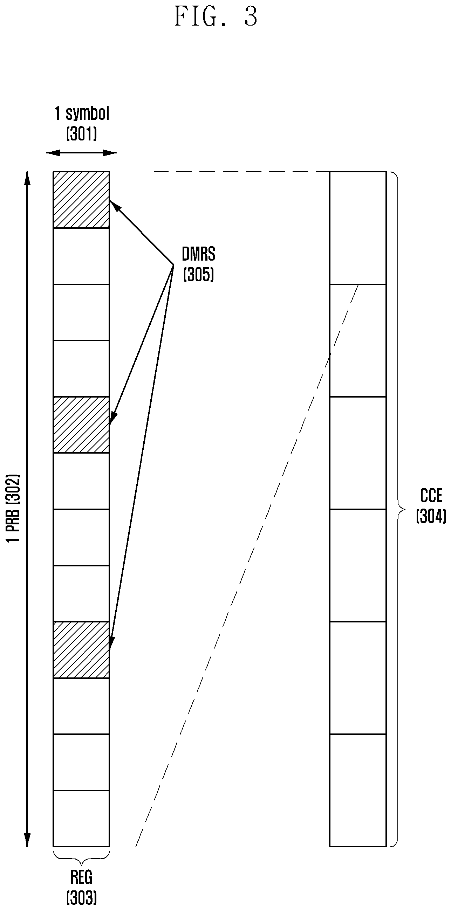

FIG. 3 is a diagram illustrating an example of a basic unit of time resources and frequency resources constituting a downlink control channel that may be used in a 5G system according to various embodiments of the disclosure. With reference to FIG. 3, a basic unit (REG) of time resources and frequency resources constituting the control channel is composed of 1 OFDM symbol 301 on the time axis and 12 subcarriers 302, that is, 1 RB on the frequency axis. In constituting the basic unit of the control channel, by assuming a time axis basic unit to 1 OFDM symbol 301, a data channel and a control channel may be time-multiplexed within one subframe. By placing the control channel before the data channel, the user's processing time may be reduced, making it easy to satisfy the latency requirement. By configuring a frequency axis basic unit of the control channel to 1 RB 302, frequency multiplexing between the control channel and the data channel may be performed more efficiently.

By concatenating REGs 303 illustrated in FIG. 3, control resource sets (CORESETs) of various sizes may be configured. For example, in the case that a basic unit to which a downlink control channel is allocated in a 5G system is a CCE 304, 1 CCE 304 may be composed of a plurality of REGs 303. When the REG 303 illustrated in FIG. 3 is described as an example, it means that the REG 303 may be composed of 12 REs, and when 1 CCE 304 is composed of 6 REGs 303, it means that 1 CCE 304 may be composed of 72 REs. When a control resource set is configured, the corresponding control resource set may be composed of a plurality of CCEs 304, and a specific downlink control channel may be mapped to one or a plurality of CCEs 304 according to an AL in the control resource set and transmitted. The CCEs 304 in the control resource set are identified by numbers, and in this case, the numbers may be assigned according to a logical mapping method.

The basic unit, that is, the REG 303 of the downlink control channel illustrated in FIG. 3, may include both REs to which DCI is mapped and an area to which a DMRS 305, which is a reference signal for decoding the REs, is mapped. As illustrated in FIG. 3, the DMRS 305 may be transmitted in 3 REs within 1 REG 303. For reference, because the DMRS 305 is transmitted using the same precoding as the control signal mapped in the REG 303, the UE may decode control information without information on which precoding the base station has applied.

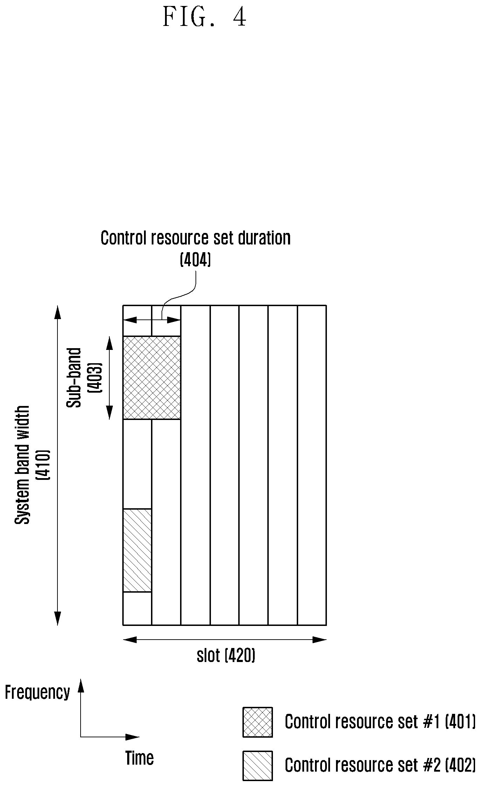

FIG. 4 is a diagram illustrating an example of a control resource set in which a downlink control channel is transmitted in a 5G system according to various embodiments of the disclosure. FIG. 4 illustrates an example in which two control resource sets (control resource set #1, 401, control resource set #2, 402) are configured within a system bandwidth 410 on the frequency axis and one slot 420 on the time axis (in an example of FIG. 4, it is assumed that one slot is 7 OFDM symbols, but one slot may be 14 symbols). The control resource sets 401 and 402 may be configured as specific sub-bands 403 within the entire system bandwidth 410 on the frequency axis. One or a plurality of OFDM symbols may be configured to the time axis, and this may be defined as a control resource set duration 404. In an example of FIG. 4, the control resource set #1, 401 is configured to a control resource set duration of 2 symbols, and the control resource set #2, 402 is configured to a control resource set duration of 1 symbol.

The control resource set in the 5G system described above may be configured by the base station to the UE through higher layer signaling (e.g., system information, master information block (MIB), radio resource control (RRC) signaling). Configuring the control resource set to the UE means providing at least one of information such as a position of a control resource set, a subband, resource allocation of the control resource set, and a control resource set duration. For example, information for configuring the control resource set described below may include at least one of information in Table 3.

[Table 3]

| |
|---|
| - Configuration information 1. Frequency axis RB allocation information<br>- Configuration information 2. Control resource set start symbol<br>- Configuration information 3. Control resource set symbol length<br>- Configuration information 4. REG bundling size (2, 3, or 6)<br>- Configuration information 5. Transmission mode (interleaved transmission method or non-interleaved transmission method)<br>- Configuration information 6. DMRS configuration information (this may be information related to precoding granularity)<br>- Configuration information 7. Search space type (common search space, group-common search space, UE-specific search space)<br>- Configuration information 8. DCI format to be monitored in the corresponding control resource set<br>- etc. |

In addition to the configuration information of Table 3, various type of information necessary for transmitting a downlink control channel may be configured to the UE.

Hereinafter, DCI in the 5G system will be described in detail.

In the 5G system, scheduling information on uplink data transmitted on a physical uplink shared channel (PUSCH) or downlink data transmitted on a PDSCH is transmitted from a base station to a UE through DCI. The UE may monitor a DCI format for fallback and a DCI format for non-fallback with respect to a PUSCH or a PDSCH. The DCI format for fallback may be composed of a fixed field between the base station and the UE, and the DCI format for non-fallback may include a configurable field.

DCI for fallback scheduling a PUSCH may include, for example, information in Table 4.

[Table 4]

| |
|---|
| - Identifier for DCI formats - [1] bit<br>    - Frequency domain resource assignment $\left[\lceil log_2(N_{RB}^{UL,BWP}(N_{RB}^{UL,BWP} + 1)/2\rceil \right]$ bits<br>- Time domain resource assignment - 4 bits<br>- Frequency hopping flag - 1 bit<br>- Modulation and coding scheme - 5 bits<br>- New data indicator - 1 bit<br>- Redundancy version - 2 bits<br>- HARQ process number - 4 bits<br>- TPC command for scheduled PUSCH - [2] bits<br>- UL/SUL indicator - 0 or 1 bit |

DCI for non-fallback scheduling a PUSCH may include, for example, information in Table 5.

[Table 5]

| |
|---|
| - Carrier indicator - 0 or 3 bits |

(continued)

- UL/SUL indicator - 0 or 1 bit
- Identifier for DCI formats - [1] bits
- Bandwidth part indicator - 0, 1, or 2 bits
- Frequency domain resource assignment

∘ For resource allocation type 0, $\lceil N_{RB}^{UL,BWP}/P \rceil$ bits

∘ For resource allocation type 1,

$$\lceil log_2(N_{RB}^{UL,BWP}(N_{RB}^{UL,BWP}+1)/2) \rceil \text{ bits}$$

- Time domain resource assignment - 1, 2, 3, or 4 bits
- VRP-to-PRB mapping - 0 or 1 bit, only for resource allocation type 1.
    ∘ 0 bit if only resource allocation type 0 is configured;
    ∘ 1 bit otherwise.
- Frequency hopping flag - 0 or 1 bit, only for resource allocation type 1.
    ∘ 0 bit if only resource allocation type 0 is configured;
    ∘ 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
∘ 1 bit for semi-static HARQ-ACK codebook;
∘ 2 bits for dynamic HARQ-ACK codebook with single HARQ-ACK codebook.
- 2nd downlink assignment index - 0 or 2 bits
    ∘ 2 bits for dynamic HARQ-ACK codebook with two HARQ-ACK sub-codebooks;
    ∘ 0 bit otherwise.
- TPC command for scheduled PUSCH - 2 bits

- SRS resource indicator - $\lceil log_2(\sum_{k=1}^{L_{MAX}}\binom{N_{SRS}}{k}) \rceil$ or $\lceil Log_2(N_{SRS}) \rceil$ bits

∘ $\lceil log_2(\sum_{k=1}^{L_{MAX}}\binom{N_{SRS}}{k}) \rceil$ bits for non-codebook based PUSCH transmission

∘ $\lceil log_2(N_{SRS}) \rceil$ bits for codebook based PUSCH transmission.

- Precoding information and number of layers - up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 0 or 2 bits
- beta_offset indicator - 0 or 2 bits
- DMRS sequence initialization - 0 or 1 bit

DCI for fallback scheduling a PDSCH may include, for example, information in Table 6.

[Table 6]

- Identifier for DCI formats - [1] bit
    - Frequency domain resource assignment - $[\lceil log_2(N_{RB}^{DL,BWP}(N_{RB}^{DL,BWP}+1)/2 \rceil$ bits
- Time domain resource assignment - 4 bits
- VRB-to-PRB mapping - 1 bit
- Modulation and coding scheme - 5 bits

(continued)

| |
|---|
| - New data indicator - 1 bit<br>- Redundancy version - 2 bits<br>- HARQ process number - 4 bits<br>- Downlink assignment index - 2 bits<br>- TPC command for scheduled PUSCH - [2] bits<br>- PUCCH resource indicator - 3 bits<br>- PDSCH-to-HARQ feedback timing indicator - [3] bits |

DCI for non-fallback scheduling a PDSCH may include, for example, information in Table 7.

[Table 7]

| |
|---|
| - Carrier indicator - 0 or 3 bits<br>- Identifier for DCI formats - [1] bits<br>- Bandwidth part indicator - 0, 1 or 2 bits<br>- Frequency domain resource assignment<br><br>    ◦ For resource allocation type 0, $\lceil N_{RB}^{DL,BWP}/P \rceil$ bits<br><br>    ◦ For resource allocation type 1, $\lceil log_2(N_{RB}^{DL,BWP}(N_{RB}^{DL,BWP}+1)/2) \rceil$ bits<br><br>- Time domain resource assignment - 1, 2, 3, or 4 bits<br>- VRB-to-PRB mapping - 0 or 1 bit, only for resource allocation type 1.<br>◦ 0 bit if only resource allocation type 0 is configured;<br>◦ 1 bit otherwise.<br>- PRB bundling size indicator - 0 or 1 bit<br>- Rate matching indicator - 0, 1, or 2 bits<br>- ZP CSI-RS trigger- 0, 1, or 2 bits<br>For transport block 1:<br>- Modulation and coding scheme - 5 bits<br>- New data indicator - 1 bit<br>- Redundancy version - 2 bits<br>For transport block 2:<br>- Modulation and coding scheme - 5 bits<br>- New data indicator - 1 bit<br>- Redundancy version - 2 bits<br>- HARQ process number - 4 bits<br>- Downlink assignment index - 0, 2, or 4 bits<br>- TPC command for scheduled PUCCH - 2 bits<br>- PUCCH resource indicator - 3 bits<br>- PDSCH-to-HARQ_feedback timing indicator - 3 bits<br>- Antenna ports - 4, 5, or 6 bits<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

The DCI may be transmitted through a PDCCH via channel coding and modulation processes. A CRC is attached to a DCI message payload, and the CRC is scrambled with an RNTI corresponding to the identity of the UE. Different RNTIs are used according to the purpose of the DCI message, e.g., UE-specific data transmission, power control command, or random access response. That is, it means that the RNTI is not transmitted explicitly but is included in a CRC calculation process and transmitted. Upon receiving the DCI message transmitted on the PDCCH, the UE identifies a CRC using the allocated RNTI, and if the CRC identification result is correct, it can be seen that the corresponding message has been transmitted to the UE.

For example, DCI scheduling a PDSCH for system information (SI) may be scrambled with a system information-RNTI (SI-RNTI). DCI scheduling a PDSCH for a RAR message may be scrambled with a random access-RNTI (RA-RNTI). DCI scheduling a PDSCH for a paging message may be scrambled with a paging-RNTI (P-RNTI). DCI notifying a slot format indicator (SFI) may be scrambled with a slot format indicator-RNTI (SFI-RNTI). DCI notifying transmit power control (TPC) may be scrambled with a transmit power control-RNTI (TPC-RNTI). DCI scheduling UE-specific PDSCH or PUSCH may be scrambled with a cell-RNTI (C-RNTI).

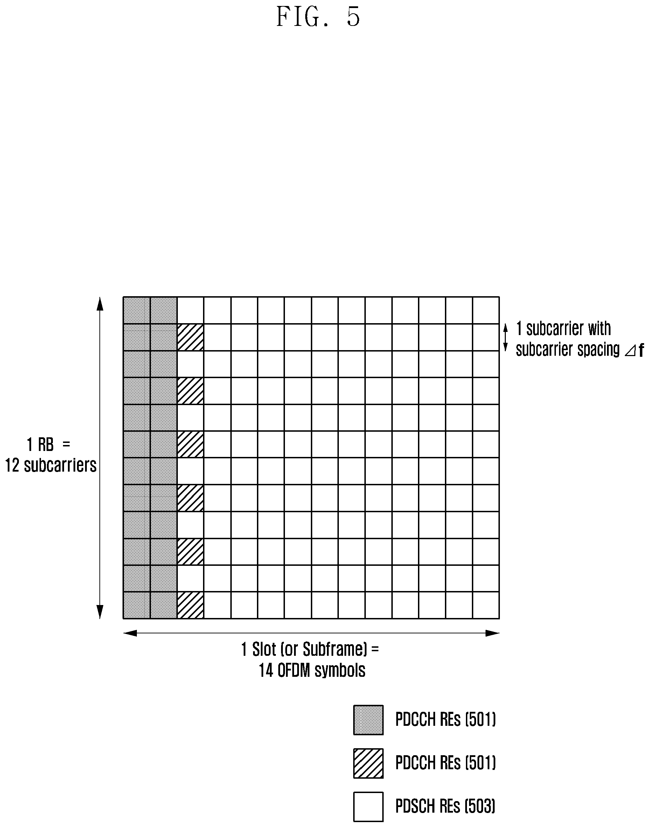

When a specific UE is scheduled for a data channel, that is, a PUSCH or PDSCH, through the PDCCH, data is transmitted and received together with the DMRS within the scheduled resource set. FIG. 5 is a diagram illustrating an example of data transmission using a DMRS according to various embodiments of the disclosure.

FIG. 5 illustrates an example in which a specific UE uses 14 OFDM symbols as one slot (or subframe) in downlink and in which a PDCCH is transmitted in initial two OFDM symbols and in which a DMRS is transmitted in a third symbol. In the case of FIG. 5, within a specific RB in which a PDSCH is scheduled, downlink data is mapped and transmitted to REs in which the DMRS is not transmitted in a third symbol and REs from a fourth symbol to the last symbol thereafter. A subcarrier interval $\Delta f$ expressed in FIG. 5 is 15 kHz in the case of LTE and LTE-A systems, and uses one of {15, 30, 60, 120, 240, 480} kHz in the case of the 5G system.

As described above, in order to measure a downlink channel state in a cellular system, a base station should transmit a reference signal. In the case of a long term evolution advanced (LTE-A) system of 3GPP, a UE may measure a channel state between the base station and the UE using a CRS or channel state information-reference signal (CSI-RS) transmitted by the base station. The channel state should be measured considering various factors, which may include an amount of interference in downlink. The amount of interference in the downlink includes an interference signal and thermal noise generated by an antenna belonging to a neighboring base station, and the amount of interference in the downlink is important for the UE to determine a downlink channel situation. For example, in the case that a base station with one transmission antenna transmits a signal to a UE with one reception antenna, the UE should determine Es/Io by determining energy per symbol that may be received in the downlink from a reference signal received from the base station and an amount of interference to be simultaneously received in a section receiving the corresponding symbol. The determined Es/Io may be converted into a data transmission rate or a value corresponding thereto and transmitted to the base station in the form of a channel quality indicator (CQI), and be used for determining at what data transmission rate the base station will perform transmission to the UE.

In the case of the LTE-A system, the UE feeds back information on a downlink channel state to the base station so that the base station may use the information for downlink scheduling. That is, the UE measures a reference signal transmitted by the base station in the downlink and feeds back information extracted therefrom to the base station in the form defined in the LTE/LTE-A standard. As described above, information fed back by the UE in LTE/LTE-A may be referred to as channel state information, and the channel state information may include the following three pieces of information.

- Rank Indicator (RI): The number of spatial layers in which the UE may receive in a current channel state
- Precoding Matrix Indicator (PMI): An indicator for a precoding matrix preferred by the UE in a current channel state
- Channel Quality Indicator (CQI): maximum data rate in which the UE may receive in a current channel state

The CQI may be replaced with a signal to interference plus noise ratio (SINR) that may be used similarly to the maximum data rate, maximum error correction code rate and modulation scheme, and data efficiency per frequency.

The RI, PMI, and CQI are associated with each other and have meaning. For example, a precoding matrix supported by LTE/LTE-A is defined differently for each rank. Therefore, a PMI value X when the RI has a value of 1 and a PMI value X when the RI has a value of 2 may be interpreted differently. Further, even when the UE determines a CQI, it is assumed that the PMI and X notified by the UE to the BS are applied by the BS. That is, when the UE reports RI_X, PMI_Y, and CQI_Z to the base station, it is equivalent to reporting that the corresponding UE may receive a data rate corresponding to CQI_Z when the rank is RI_X and the PMI is PMI_Y. In this way, when the UE calculates the CQI, it is assumed which transmission method will be performed by the base station so that an optimized performance may be obtained when actual transmission is performed using the corresponding transmission method.

The RI, PMI, and CQI, which are channel state information fed back by the UE in LTE/LTE-A, may be fed back in a periodic or aperiodic form. In the case that the base station wants to aperiodically acquire channel state information of a specific UE, the base station may be configured to perform aperiodic feedback (or aperiodic channel state information reporting) using an aperiodic feedback indicator (or channel state information request field, channel state information request information) included in downlink control information (DCI) for the UE. Further, when the UE receives an indicator configured to perform aperiodic feedback in an nth subframe, the UE includes aperiodic feedback information (or channel state information) in data transmission in an n+kth subframe to perform uplink transmission. Here, k is a parameter defined in the 3GPP LTE Release 11 standard, is 4 in frequency division duplexing (FDD), and may be defined as illustrated in [Table 8] in time division duplexing (TDD).

[Table 8] k value for each subframe number n in a TDD UL/DL configuration

| TDD UL/DL Configuration | subframe number $n$ | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

In the case that aperiodic feedback is configured, feedback information (or channel state information) includes an RI, PMI, and CQI, and the RI and PMI may not be fed back according to a feedback configuration (or channel state report configuration).

An in-band full duplex (hereinafter, referred to as full duplex) system is a system in which an uplink signal and a downlink signal of the same cell are simultaneously transmitted within the same band and time resource, unlike a time division transmission and reception (TDD) or frequency division transmission and reception (FDD) system. That is, in the full duplex system, uplink and downlink signals are mixed in the same cell and exist, which acts as interference.

A type of additional interference caused by the use of a full duplex system may be classified into two types: self-interference and cross-link interference.

Self-interference means interference received (or generated) from downlink transmission of the base station in the same band when the base station receives uplink of the UE and/or interference received (or generated) from uplink transmission of a UE when the UE receives downlink in the case that the UE has a full duplex operation function. Self-interference greatly reduces a signal to interference and noise ratio (SINR) of a desired signal because transmission and reception occur at a shorter distance than the desired signal. Therefore, a transmission performance of a full duplex system is greatly affected by a performance of self-interference cancellation technology.

Cross-link interference means interference received from downlink transmission of other base stations received in the same band when a base station receives uplink of a UE and/or interference received from uplink transmissions of other UEs when a UE receives downlink. In the case of cross-link interference in which a base station receiving an uplink signal receives from downlink transmission of another base station, a distance from an interference transmitting end to an interference receiving end is greater than a distance between the UE transmitting a request signal of the base station and a receiving end of the base station, but because interference transmission power is generally greater than transmission power of the UE by 10-20 dB, it may greatly affect a reception SINR performance of an uplink desired signal of the UE received by the base station. Further, a UE receiving downlink may receive cross-link interference from another UE using uplink in the same band. In this case, in the case that a distance between a UE causing the interference and a UE receiving the downlink is meaningfully closer than the distance between the base station and the UE receiving the downlink, a downlink desired signal reception SINR performance of the UE may be lowered. In this case, the meaningfully close case means a close state in which reception power of interference coming from the uplink UE in the downlink receiving UE is greater than or similar to the received signal from the base station in the downlink receiving UE; thus, a performance of the downlink reception SINR of the UE may be lowered.

In a cellular-based mobile communication system, a type of a full duplex system is divided into a type in which only the base station supports self-interference cancellation for supporting a full duplex operation and a type in which both the base station and the UE support self-interference cancellation for supporting a full duplex operation. The reason for not considering the case that only the UE has self-interference cancellation is that antenna separation self-interference cancellation, RF-circuit self-interference cancellation, and digital self-interference cancellation, which are components may be implemented more easily in the base station than in the UE in terms of a form factor size and a circuit structure. The type of the full duplex system considered in various embodiments of the disclosure basically considers the case in which the base station has self-interference cancellation for convenience of description, but various embodiments of the disclosure may be equally applied and to not only the case that only the base station has self-interference cancellation, but also the case that both the UE and the base station have self-interference cancellation. In various embodiments of the disclosure, for convenience of description, an operation for self-interference measurement of an IAB node as an example of the base station will be described. However, the embodiment of the disclosure may be equally applied to other base stations for measuring self-interference as well as the IAB node. For example, the base station other than the IAB node may receive a configuration for self-interference channel measurement from a higher node or a third base station, and the other base station may transmit a signal for self-interference measurement in a resource indicated by the self-interference channel measurement configuration, and measure the self-interference channel based on the signal.

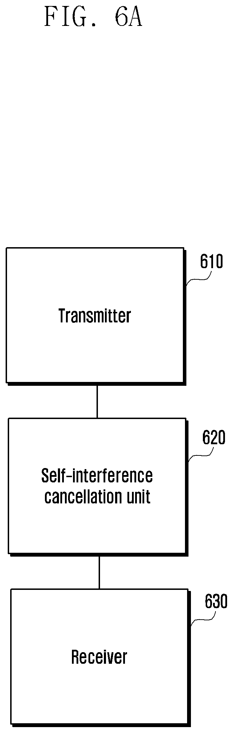

FIG. 6A illustrates a transceiver having self-interference cancellation, which is a main component of a full duplex system according to various embodiments of the disclosure. In this case, a structure of the transceiver is equally applicable to a base station and a UE, and does not specify a structure of any one of the base station and the UE. However, in the following embodiment of the disclosure, because it is assumed that the base station basically has self-interference cancellation and constitutes a full duplex system, for convenience, it is assumed that the transceiver is a base station.

In FIG. 6A, the components of the base station may be composed of a transmitter 610 for transmitting a downlink signal to a UE, a self-interference cancellation unit 620 for canceling self-interference, and a receiver 630 for receiving an uplink signal from the UE. In this case, a detailed constitution method of each component may vary according to an implementation method of the base station. The interference cancellation unit 620 may be defined as a controller. Further, the controller may include at least one processor.

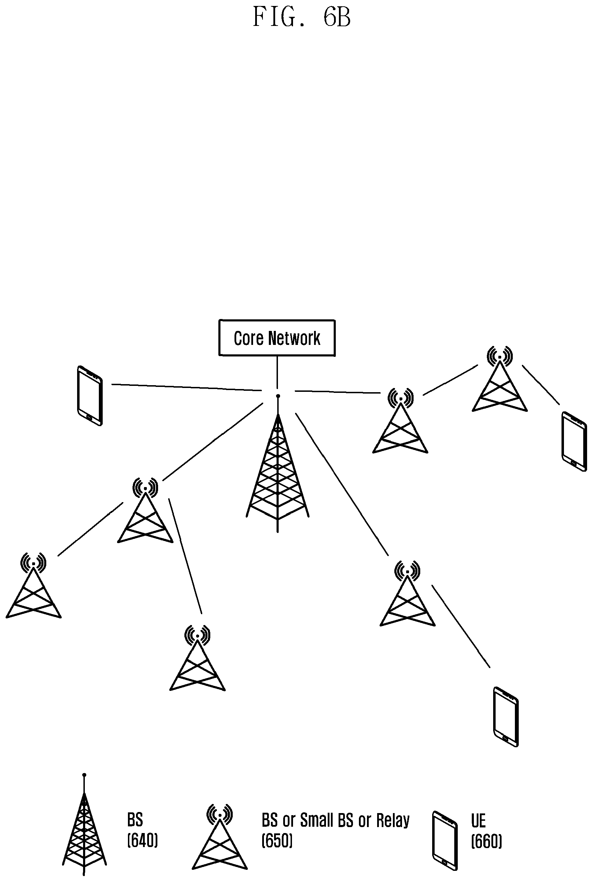

FIG. 6B is a diagram illustrating a network composed of one or more objects 640 connected to a core network, an object 650 connected to the corresponding object in a hierarchical structure, and a UE 660 according to various embodiments of the disclosure.

With reference to FIG. 6B, an object 640 directly connected to the core network within one cell may be the plural. Alternatively, there may be no object 640 directly connected to the core network within one cell, and there may be only an object 650 hierarchically connected from objects directly connected to a core network of adjacent cells. In general, in NR, the object 640 directly connected to the core network may be a gNB, and the object 650 hierarchically connected to the object 640 may be a gNB, a small cell, an integrated access backhaul (IAB), or a relay. Various embodiments of the disclosure assume that the object 650 hierarchically connected to the object 640 directly connected to the core network supports full duplex communication in a network situation as illustrated in FIG. 6B. Further, in various embodiments of the disclosure, it is assumed and described that the object 650 hierarchically connected to the object 640 directly connected to the core network is an integrated access backhaul (IAB).

The integrated access backhaul (IAB) network is a network capable of improving network densification caused by physical limitations of a wired backhaul and extending the network to particularly, a high-frequency band area. Base stations communicate with UEs over radio access links. One base station (IAB-donor) is connected to a fiber optic backhaul link, and other base stations (IAB-nodes) communicate wirelessly with the IAB-donor or perform wireless communication between IAB-nodes. Among the IAB-nodes wirelessly connected to the backhaul link, a higher-level IAB-node close to the IAB-donor becomes a parent IAB or an upper-level IAB, and a lower-level IAB close to the UE becomes a child IAB or a lower IAB. At least one base station directly communicating with the core network may function as a root node. An IAB-node connected by a wireless backhaul link may wirelessly communicate with one or more other IAB-node nodes, exchange information, and function as an anchor for communicating with the core network. In various embodiments of the disclosure, it is assumed and described that the IAB-node of the integrated access backhaul network is a base station operating in a full duplex system.

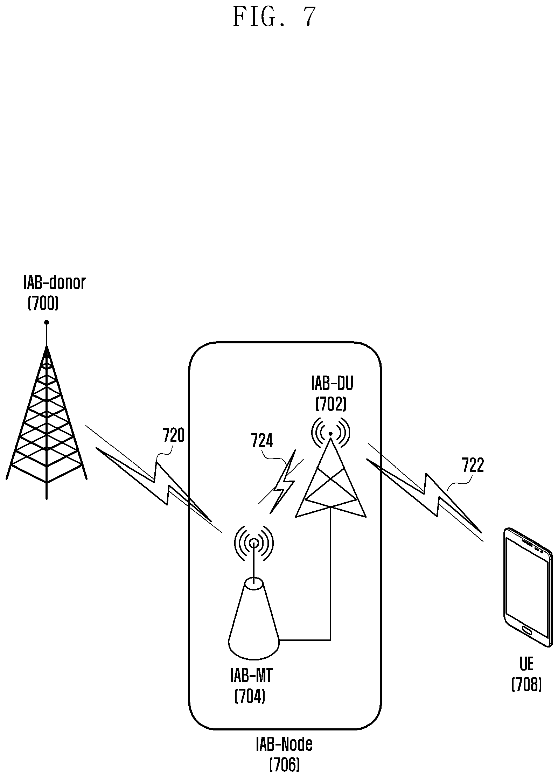

FIG. 7 is a diagram illustrating an example in which an IAB-node performs communication with an IAB-donor and a UE with the same time-frequency resource using full duplex communication according to various embodiments of the disclosure.

With reference to FIG. 7, an IAB-node 706 supporting full duplex communication performs (722) communication between an IAB-DU 702 and a UE 708 while performing (720) communication between an IAB-donor 700 and an IAB-MT 704 using the same time-frequency resource. In this case, in the case that communication is performed in which a communication direction of a link 720 between the IAB-donor 700 and the IAB-MT 704 and a link 722 between the IAB-DU 702 and the UE 708 coincide, self-interference 724 between the IAB-DU 702 and the IAB-MT 704 may occur. That is, in the case that downlink transmission from the IAB-donor 700 to the IAB-MT 704 and downlink transmission from the IAB-DU 702 to the UE 708 are performed in the same time-frequency resource, self-interference from the IAB-DU 702 to IAB-MT 704 may occur. Further, in the case that uplink transmission from the IAB-MT 704 to the IAB-donor 700 and uplink transmission from the UE 708 to the IAB-DU 702 are performed in the same time-frequency resource, self-interference from the IAB-MT 704 to the IAB-DU 702 may occur.

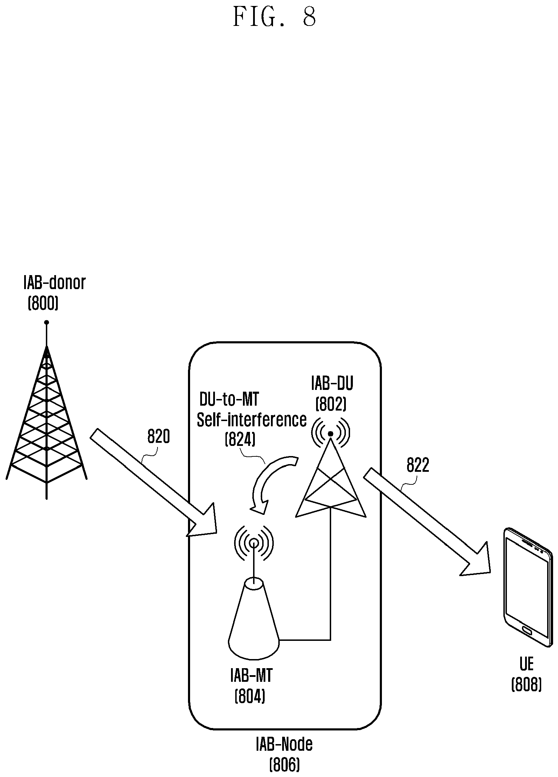

FIG. 8 is a diagram illustrating an example in which an IAB-distributed unit (DU) performs downlink communication with a UE using the same time-frequency resource while an IAB-donor performs downlink communication with an IAB-mobile termination (IAB-MT) according to various embodiments of the disclosure.

With reference to FIG. 8, in the case that an IAB-DU 802 transmits downlink 822 to a UE 808 in a time-frequency resource in which an IAB-donor 800 transmits downlink 820 to an IAB-MT 804, DU-to-MT self-interference 824 occurs from the IAB-DU 802 to the IAB-MT 804. In order to prevent quality degradation of a downlink signal of the IAB-donor received by the IAB-MT 804, an IAB-node 806 may estimate a DU-to-MT self-interference channel to cancel DU-to-MT self-interference 824. Upon estimating the DU-to-MT self-interference channel, a signal transmitting the downlink 820 from the IAB-donor 800 to the IAB-MR 804 acts as an interference signal for the DU-to-MT self-interference channel. Therefore, in the case that the IAB-node 806 measures the DU-to-MT self-interference channel using time-frequency resources in which the IAB-donor 800 does not transmit downlink to the IAB-MT 804, optimal self-interference channel measurement results may be obtained.

Even in the case that the IAB-node 806 does not receive downlink scheduling from the IAB-donor 800 to the IAB-MT 804, it is impossible to distinguish whether the time-frequency resource used for DU-to-MT self-interference measurement is in use by the IAB-donor 800. That is, in the time-frequency resource used by the IAB-node 806 in order to measure DU-to-MT self-interference, the case that the IAB-donor 800 transmits downlink to an MT or UE of another IAB-node may not be recognized. In this case, a signal transmitted from the IAB-donor 800 to the MT of another IAB-node acts as an interference signal in the DU-to-MT self-interference channel measured by the IAB-node 806; thus, the IAB-node 806 may inaccurately measure the self-interference channel.

In various embodiments of the disclosure, the IAB-donor 800 may transmit or exchange information for measuring an interference channel to or with the IAB-node 806. The IAB-donor 800 may transmit information including at least one of an uplink and downlink transmission time-frequency resource or a self-interference measurement indicator to the IAB-node 806, and the IAB-node 806 may measure DU-to-MT self-interference using a designated resource. In this case, the IAB-donor 800 may lower a level of an interference signal generating in DU-to-MT self-interference measurement of the IAB-node 806 with a method of not using the corresponding resource or transmitting the corresponding resource by lowering transmission power.

According to various embodiments of the disclosure, information for self-interference measurement of an IAB-node may be exchanged between an IAB-donor and an IAB-node through RRC, medium access control (MAC) control element (CE), or DCI.

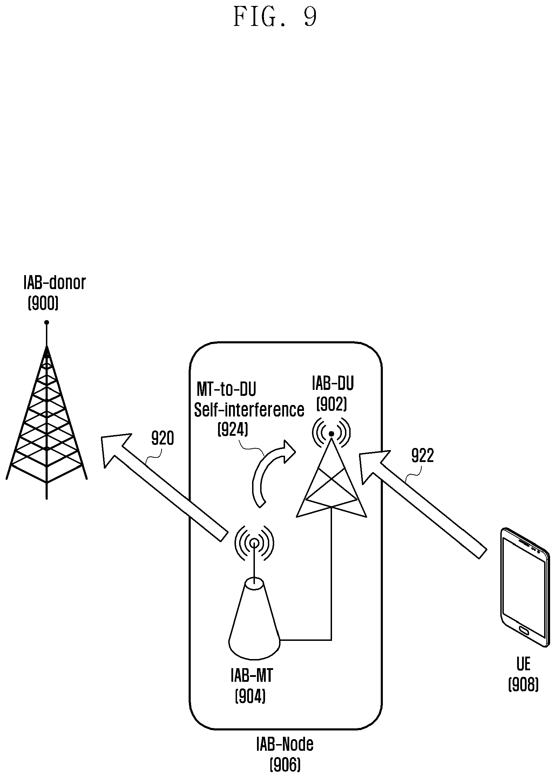

FIG. 9 is a diagram illustrating an example in which a UE performs uplink communication with an IAB-DU using the same time-frequency resource while an IAB-MT performs uplink communication with an IAB-donor according to various embodiments of the disclosure.

With reference to FIG. 9, in the case that an UE 908 transmits uplink 922 to an IAB-DU 902 in the time-frequency resource in which an IAB-MT 904 transmits uplink 920 to an IAB-donor 900, MT-to-DU self-interference 924 occurs from the IAB-MT 904 to the IAB-DU 902. In order to prevent quality deterioration of an uplink signal of the UE 908 received by the IAB-DU 902, an IAB-node 906 may estimate an MT-to-DU self-interference channel to cancel MT-to-DU self-interference 924. Upon estimating the MT-to-DU self-interference channel, a signal transmitting the uplink 922 from the UE 908 to the IAB-DU 902 acts as an interference signal for the MT-to-DU self-interference channel. Therefore, in the case that the IAB-node 906 measures the MT-to-DU self-interference channel using a time-frequency resource in which the UE 908 does not transmit uplink to the IAB-DU 902, optimal interference channel measurement results may be obtained. In various embodiments of the disclosure, the IAB-node 906 may perform MT-to-DU self-interference measurement using resources not allocated as uplink resources of the UE 908. Alternatively, after requesting the UE 908 to prohibit use of a specific time-frequency resource, the IAB-node 906 may measure MT-to-DU self-interference in the corresponding resource.

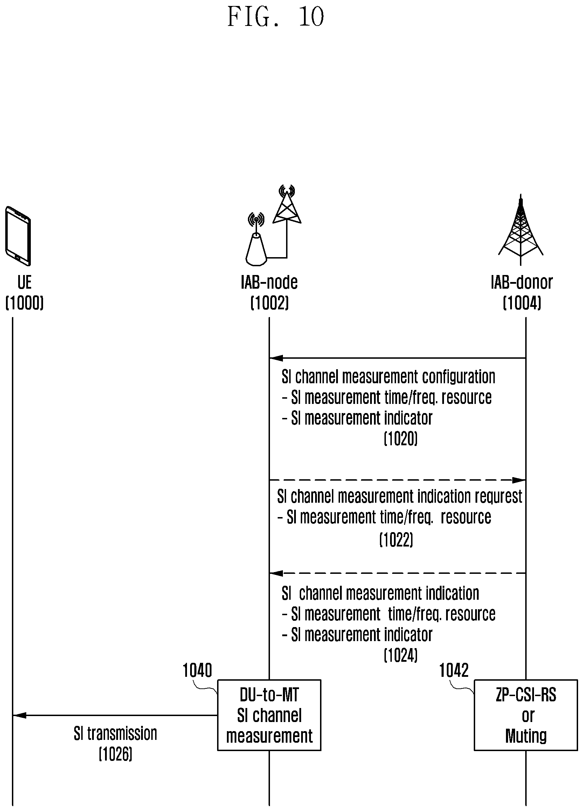

FIG. 10 is a message flow diagram illustrating an example of a downlink self-interference measurement process of a single-hop IAB node according to various embodiments of the disclosure.

With reference to FIG. 10, an IAB-donor 1004 or a parent IAB (not illustrated) may transmit (1020) an SI channel measurement configuration to an IAB-node 1002. The self-interference channel measurement configuration may include at least one information of a time to measure self-interference, a frequency resource to measure self-interference, an SI measurement indication, a self-interference measurement period, a self-interference measurement beam configuration, or offset information. The self-interference measurement indication may indicate whether a self-interference measurement operation is performed. In the case that the self-interference measurement indication is omitted, self-interference measurement may be implicitly instructed according to the self-interference channel measurement configuration, or the self-interference channel measurement configuration may be performed according to the self-interference channel measurement configuration and preconfigured trigger conditions. The beam configuration may include at least one information such as a beam type for self-interference measurement, a beam index, or quasi co location (QCL) information. The IAB-donor 1004 may provide, to the IAB-node 1002, a self-interference channel measurement configuration set including a plurality of self-interference channel measurement configurations. Among the plurality of self-interference channel measurement configurations, a specific self-interference channel measurement configuration may be used according to a preconfigured condition, and a self-interference channel measurement configuration may be selected according to resources used by the IAB-node 1002. Further, when the IAB-node 1002 provides, to the IAB-donor 1004, a configuration or configuration candidates to be used by the IAB-node 1002 among the set, the IAB-donor 1004 may authorize the use of self-interference channel measurement configuration of at least one of the requested configuration. According to an embodiment of the disclosure, the self-interference channel measurement configuration may be transmitted with an RRC message, and in various embodiments of the disclosure, a method of transmitting the message is not limited.

When it is determined that self-interference measurement is necessary other than the case that a self-interference measurement configuration is designated by the IAB-donor 1004, the IAB-node 1002 may transmit information for an SI measurement indication request to the IAB-donor 1004 (1022). For example, in the case that a new UE is introduced into the coverage of the IAB-node 1002, in the case that a beam transmitting to an UE 1000 is changed, or in the case that a received packet decoding failure rate is a threshold or more, the IAB-node 1002 may transmit information for a self-interference measurement indication request to the IAB-donor 1004. The information or message for the self-interference measurement indication request may include at least one information of a time resource or a frequency resource to measure self-interference, a self-interference measurement indication, a self-interference measurement period, or a self-interference measurement beam configuration (1022). To this end, information on resources that may be requested by the IAB-node 1002 may be configured in advance or may be received in advance from the IAB-donor 1004. The frequency resource may be a frequency resource in which self-interference is estimated to occur. In response to the self-interference measurement indication request message from the IAB-node 1002, the IAB-donor 1004 may transmit a message including either information indicating specific information among information transferred to the self-interference channel measurement configuration through an RRC message, or at least one information of a time resource or a frequency resource to measure newly configured self-interference, self-interference measurement indication, or approval indication for all or part of information simply requested by the IAB-node 1002 to the IAB-node 1002 (1024). Further, the IAB-node 1002 may provide interference measurement information to the IAB-donor 1004, and the IAB-donor 1004 may provide a self-interference measurement configuration to the IAB-node 1002 based on interference measurement information.

By not using the time-frequency resource indicated through operation 1020 or 1024 (e.g., uses ZP-CSI-RS), lowering and using transmission power of the resource, or not using a beam that causes interference of a threshold or more for the IAB-node, the IAB-donor 1004 may lower a level of an interference signal generated in self-interference measurement of the IAB-node 1002 (1042).

The IAB-node 1002 measures a signal received to the IAB-MT to measure (1040) a DU-to-MT self-interference channel while transmitting (1026) a signal to the time-frequency resource for self-interference channel measurement. For example, while transmitting a downlink signal through an IAB-DU of the IAB-node 1002, the IAB-node 1002 may measure a signal received to the IAB-MT thereof to measure the DU-to-MT self-interference channel. Alternatively, a signal transmitted by the IAB-DU of the IAB-node 1002 may use a pre-defined signal or may use a control signal or data signal transmitted to downlink of the UE. The IAB-node 1002 may transmit an arbitrary signal to a corresponding resource for DU-to-MT self-interference measurement even in the case that there is no UE to transmit downlink. A resource to which a signal is transmitted may be any resource in which the IAB-node 1002 may configure as well as reference signal resources such as CSI-RS, DM-RS, and CRS commonly used for channel measurement. For example, the IAB-MT may measure a self-interference channel from all or part of an SSB, PDCCH, or PDSCH resource transmitted by the IAB-DU. This is because the IAB-MT accurately knows a signal transmitted by the IAB-DU within the same IAB-node 1002.

Further, the IAB-node 1002 may separately measure a self-interference channel for each subset of beams belonging to a beam set operating in each self-interference measurement resource. For example, the IAB-node 1002 may measure a self-interference channel for a beam communicating with the UE 1000, measure self-interference for each beam while sweeping all or part of all beams in operation, or measure self-interference for any beam.

Some of information included in the self-interference channel measurement configuration may be configured as an RRC message, and some information may be configured through an MAC CE or DCI. Further, in the case that at least one information of the self-interference channel measurement configuration is configured through an RRC message and that a specific event occurs in the IAB-node 1002, self-interference may be measured using the preconfigured information. Further, at least one information of self-interference channel measurement configuration may be configured through an RRC message and indicate self-interference channel measurement or trigger through an MAC CE or DCI.

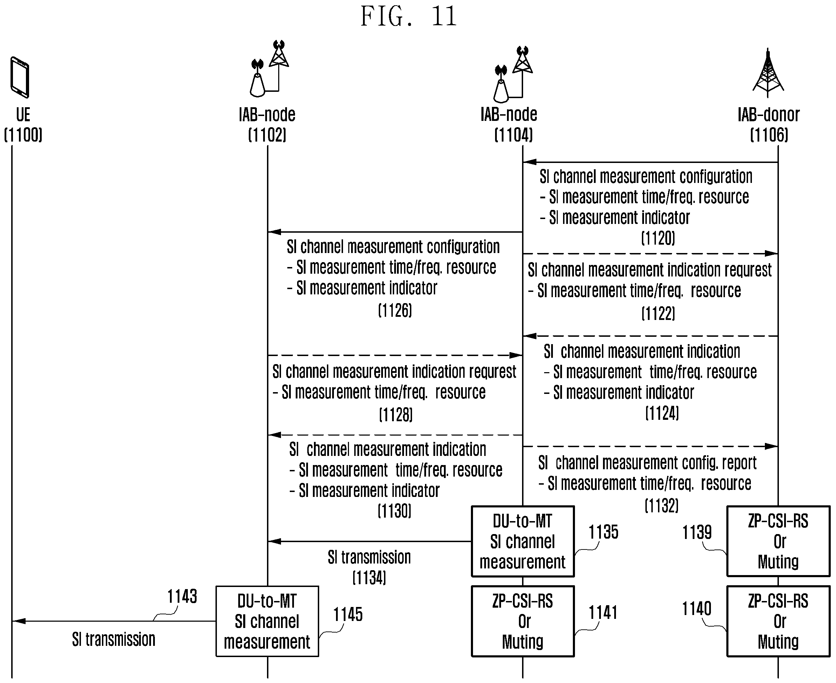

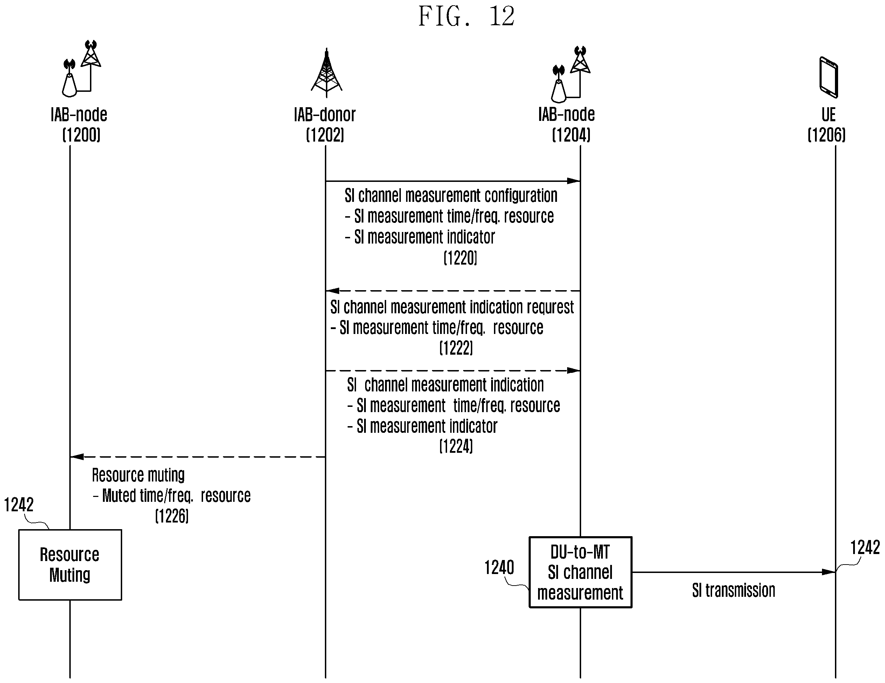

The message described in the embodiment of FIG. 10, conditions for transmitting and receiving the message, and operations of each node that has transmitted and received the message may be equally applied to corresponding messages and corresponding operations in the embodiments of FIGS. 11 and 12.

FIG. 11 is a message flow diagram illustrating an example of a downlink self-interference measurement process of a multi-hop IAB node according to various embodiments of the disclosure.

With reference to FIG. 11, operations 1120, 1122, and 1124 may correspond to operations 1020, 1022, and 1024 of FIG. 10. Further, operations 1126, 1128, and 1130 may correspond to operations 1120, 1122, and 1124 of FIG. 11 or operations 1020, 1022, and 1024 of FIG. 10. Further, operations 1040, 1042, and 1026 of FIG. 10 may be equally applied to corresponding operations of FIG. 11.

In a multi-hop IAB structure, a lower IAB node 1102 receives (1126) self-interference channel measurement configuration information from an upper IAB node 1104. In this case, the self-interference channel measurement configuration information 1126 may be information generated by the upper IAB node 1104 or may be part or all of self-interference measurement information 1120 received by the upper IAB node 1104 from an IAB-donor 1106. Further, information 1122 requesting a self-interference measurement indication transmitted from the higher IAB-node 1104 to the IAB-donor 1106 may include part or all of self-interference measurement indication request information 1128 transmitted from the lower IAB-node 1102 to the higher IAB-node 1104. Further, a self-interference measurement indication message 1130 transmitted from the upper IAB-node 1104 to the lower IAB-node 1102 may include all or part of a self-interference measurement indication message 1124 received by the upper IAB-node 1104 from the IAB-donor 1106. In this case, message transmission and reception may be performed in the order of operation 1128, operation 1122, operation 1124, and operation 1130.

After the upper IAB-node 1104 configures self-interference measurement resources of the lower IAB-node 1102, the upper IAB-node 1104 may transmit a message including the corresponding configuration information to the IAB-donor 1106 (1132). This is for the IAB-donor 1106 to perform (1140) a ZP-CSI-RS related operation or a muting operation for preventing interference in self-interference measurement resources of the lower IAB-node 1102. Further, in operation 1139, the IAB-donor 1106 may perform a ZPI-CSI-RS related operation or a muting operation for preventing interference in self-interference measurement resources of the upper IAB-node 1104. In operation 1135, the upper IAB node 1104 may perform a DU-to-MT self-interference channel measurement operation. In order to perform operation 1135, the self-interference transmission operation 1134 may be transmission to the lower IAB node 1102 or SI transmission to an UE 1100 or another UE.

In operation 1141, the higher IAB node 1104 may perform a ZP-CSI-RS related operation or a muting operation for preventing interference in self-interference measurement resources of the lower IAB node 1102. The upper IAB-node 1104 may perform operation 1141 based on a message received from the lower IAB-node 1102 in operation 1128 or a message received from the IAB-donor 1106 in operation 1124.

In operation 1143, the lower IAB node 1102 may transmit a signal for measuring the self-interference channel, and in operation 1145, the lower IAB node 1102 may perform a self-interference channel measurement operation. Self-interference may correspond to DU-to-MT self-interference channel measurement.

FIG. 12 is a message flow diagram illustrating an example of a downlink self-interference measurement process in the case that a plurality of IAB-nodes are connected to one IAB-donor according to various embodiments of the disclosure.

With reference to FIG. 12, operations 1220, 1222, and 1224 may correspond to operations 1020, 1022, and 1024 of FIG. 10. Further, operations 1026, 1040, and 1042 of FIG. 10 may be equally applied to corresponding operations of FIG. 12. In order to prevent communication of a nearby IAB-node 1200 from acting as an interference signal during self-interference measurement of an IAB-node 1204 that performs self-interference measurement, an IAB-donor 1202 may transmit, to the nearby IAB-node 1200, a resource muting message 1226 for limiting use resources of the nearby IAB-node 1200. The resource muting message may include information such as limited use time-frequency resource information, limited use beam information, and maximum power level. By not generating a signal in a resource indicated by the resource muting message, generating a signal with a very small level of power, or not using a beam that generates interference of a threshold or more to the IAB-node 1204 performing interference measurement, the nearby IAB-node 1200 may perform a resource muting operation 1242 for the self-interference measurement, the nearby IAB-node 1200 may perform a resource muting operation 1242 for self-interference measurement 1240 of the IAB-node 1204 to measure the self-interference signal. The IAB-donor 1202 may perform a muting or ZP-CSI-RS related operation, and in operation 1240, the IAB-node 1204 may perform a self-interference channel measurement operation.

In order to efficiently schedule self-interference measurement of the plurality of IAB-nodes, the IAB-donor 1202 may cluster a plurality of IAB-nodes to transmit a self-interference measurement indication message or a resource muting message. The clustering unit may be an IAB-node unit, a beam unit, or an IAB-node-UE pair unit.

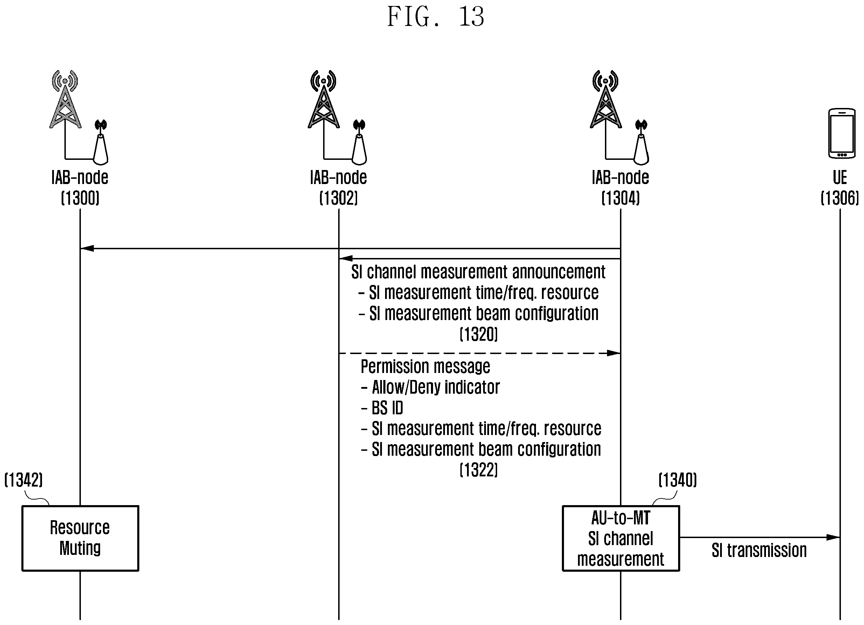

FIG. 13 is a message flow diagram illustrating an example of a process of measuring downlink self-interference in a distributed method between a plurality of IAB-nodes according to various embodiments of the disclosure.

With reference to FIG. 13, when it is determined that self-interference measurement is necessary in addition to the case that a self-interference measurement configuration is designated from an IAB-donor, an IAB node 1304 may transmit information for SI channel measurement announcement to other IAB-nodes 1300 and 1302 other than the IAB-donor (1320). The self-interference channel measurement announcement may include at least one information of a time to measure self-interference, a frequency resource to measure self-interference, or a self-interference measurement beam configuration. The other IAB-nodes 1300 and 1302 may determine whether resource use is restricted due to self-interference channel measurement of the IAB-node 1304 based on the information included in the self-interference channel measurement announcement. The other IAB-nodes 1300 and 1302 may transmit a permission message to the IAB-node 1304 that has transmitted the self-interference channel measurement announcement (1322). The permission message may include an ID of an IAB-node that has transmitted the permission message, all or part of time resources to measure self-interference included in the self-interference channel measurement announcement, all or part of frequency resources to measure self-interference, all or part of the self-interference measurement beam configuration, and a measurement allow/deny indicator for the corresponding resource and beam configuration. The other IAB-nodes 1300 and 1302 may not separately transmit permission messages according to self-determination thereof, but may perform resource muting (1342) based on the information included in the self-interference channel measurement announcement of the IAB-node 1304.

The IAB-node 1304 may provide a self-interference channel measurement announcement set including a plurality of self-interference channel measurement announcements to other IAB-nodes 1300 and 1302. The other IAB-nodes 1300 and 1302 may transmit permission messages for all or part of the plurality of self-interference channel measurement announcements.

The IAB-node 1304 may perform self-interference channel measurement (1340) based on permission messages received from other IAB-nodes or may transmit a new self-interference channel measurement announcement.

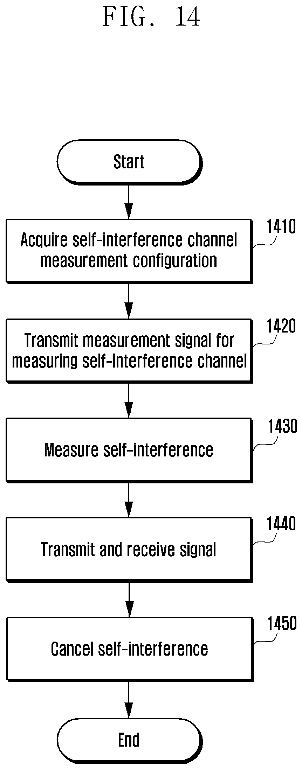

FIG. 14 is a flowchart illustrating an operation of a node performing a self-interference channel measurement operation according to various embodiments of the disclosure. A node performing the self-interference channel measurement operation may be, for example, an IAB-node, but the disclosure is not limited thereto. Hereinafter, in FIG. 14, for convenience of description, the node is referred to as a first node. With reference to FIG. 14, in operation 1410, the first node may acquire a self-interference channel measurement configuration. For example, the first node may acquire a self-interference channel measurement configuration based on operations 1020, 1022, and 1024 of FIG. 10. The self-interference channel measurement configuration may include at least one information of a time resources and a frequency resource for measuring the self-interference, a self-interference measurement indication, a period, or a beam configuration. In this case, the interference channel measurement configuration may be received from a second node connected to a core network node or may be obtained from a higher IAB-node.

As described with reference to FIG. 10, in the case that a predetermined condition is satisfied, the UE may transmit a self-interference measurement indication request to the second node and receive a self-interference measurement indication from the second node. Thereby, the UE may acquire configurations necessary for performing self-interference channel measurement.

In operation 1420, the first node may transmit a measurement signal for measuring self-interference based on the self-interference channel measurement configuration. For example, the self-interference channel measurement configuration may include information such as a type and index of the measurement signal, and include information on a resource to transmit the measurement signal. The measurement signal may be a reference signal such as a CSI-RS, CRS, or DMRS, a synchronization signal such as an SSB, or a signal, information, or data transmitted by an IAB-node to a UE through a PDCCH or PDSCH. Further, the IAB node may classify a beam set in operation in an interference measurement resource acquired through the self-interference measurement configuration into each beam subset to measure the interference channel.

The second node or higher IAB node that has transmitted the self-interference channel measurement configuration for the interference channel measurement operation may not transmit a signal in the resource for measuring the interference channel or may transmit a signal in a low level that does not interfere with the IAB node.

In operation 1430, the first node may measure the self-interference generated by the measurement signal for measuring the self-interference channel based on the self-interference channel measurement configuration. A resource for measuring self-interference and a resource for transmitting a measurement signal may be the same or partially overlap each other.

In operation 1440, the IAB node may transmit a first signal and receive a second signal. The first signal and the second signal may be performed in the same time resource and frequency resource or may be performed in partially overlapped resources. The first signal transmitted by the IAB node may act as interference with respect to the second signal received by the IAB node.

In operation 1450, the IAB node may cancel self-interference with respect to the second signal. For example, the IAB node may cancel self-interference by the first signal based on self-interference channel measurement.

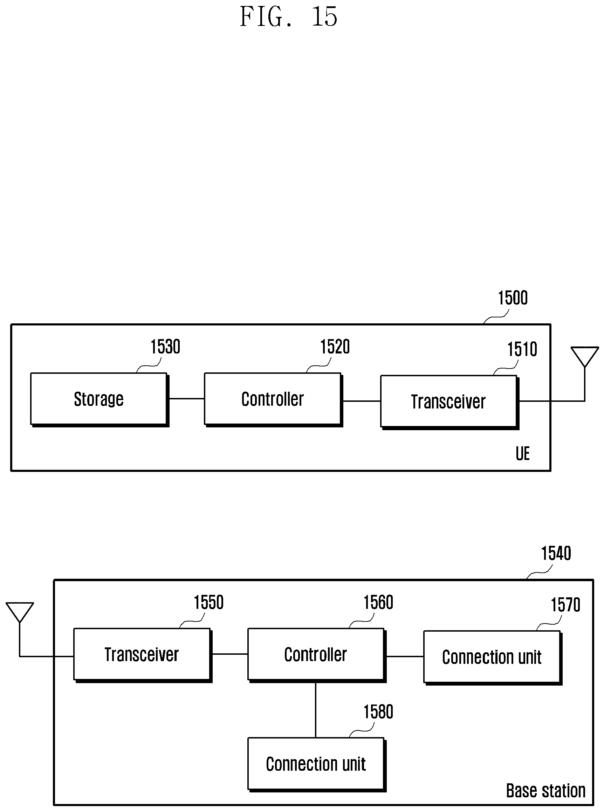

FIG. 15 is a block diagram illustrating a UE and a base station device according to various embodiments of the disclosure.

With reference to FIG. 15, a UE 1500 may include a transceiver 1510, a controller 1520, and a storage 1530. However, the components of the UE 1500 are not limited to the above-described examples, and for example, the UE 1500 may include more or fewer components than the illustrated components. Further, the transceiver 1510, the storage 1530, and the controller 1520 may be implemented in a single chip form.

The transceiver 1510 may transmit and receive signals to and from a base station 1540. Here, the signal may include control information and data. To this end, the transceiver 1510 may include an RF transmitter for up-converting and amplifying a frequency of a signal to be transmitted, and an RF receiver for amplifying a received signal with low noise and down-converting a frequency thereof. However, this is only an embodiment of the transceiver 1510, and the components of the transceiver 1510 are not limited to the RF transmitter and the RF receiver. Further, the transceiver 1510 may receive a signal through a wireless channel, output the signal to the controller 1520, and transmit the signal output from the controller 1520 through the wireless channel. Further, the transceiver 1510 may separately include an RF transceiver for first wireless communication technology and an RF transceiver for second wireless communication technology or may perform physical layer processing with a single transceiver according to the first wireless communication technology and the second wireless communication technology.

The storage 1530 may store programs and data necessary for operation of the UE 1500. Further, the storage 1530 may store control information or data included in signals transmitted and received by the UE 1500. The storage 1530 may include a storage medium such as a read only memory (ROM), a random access memory (RAM), a hard disk, a compact disk read only memory (CD-ROM), and a digital versatile disc (DVD), or a combination of storage media. Further, the storage 1530 may be the plural.

The controller 1520 may control a series of processes so that the UE 1500 may operate according to the above-described embodiment of the disclosure. For example, the controller 1520 may transmit and receive data to and from the base station or other UEs based on resource allocation information received from the base station 1540 through the transceiver 1510. The controller 1520 may be the plural, and the controller 1520 may execute a program stored in the storage 1530 to perform a component control operation of the UE 1500. The controller 1520 may include at least one processor.

The base station 1540 may include a transceiver 1550, a controller 1560, a connection unit 1570, and a storage 1580. However, the components of the base station 1540 are not limited to the above-described examples, and for example, the base station 1540 may include more or fewer components than the illustrated components. Further, the transceiver 1550, the storage 1580, and the controller 1560 may be implemented in a single chip form. The base station 1540 may correspond to an IAB-donor, an upper IAB node, or a lower IAB node according to various embodiments of the disclosure.

The transceiver 1550 may transmit and receive signals to and from the UE 1500. Here, the signal may include control information and data. To this end, the transceiver 1550 may include an RF transmitter for up-converting and amplifying a frequency of a signal to be transmitted, and an RF receiver for amplifying a received signal with low noise and down-converting a frequency thereof. However, this is only an embodiment of the transceiver 1550, and the components of the transceiver 1550 are not limited to the RF transmitter and the RF receiver. Further, the transceiver 1550 may receive a signal through a wireless channel, output the signal to the controller 1560, and transmit the signal output from the controller 1560 through a wireless channel.

The controller 1560 may control a series of processes so that the base station 1540 may operate according to the above-described embodiment of the disclosure. For example, the controller 1560 may generate a message to be transmitted to another base station and transmit the message to the other base station through the connection unit 1570. The controller 1560 may be the plural, and the controller 1560 may execute a program stored in the storage 1580 to perform a component control operation of the base station 1540. Further, the controller 1560 may include a DSM.

The storage 1580 may store programs and data necessary for the operation of the base station. Further, the storage 1580 may store control information or data included in signals transmitted and received by the base station. The storage 1580 may include a storage medium such as a ROM, a RAM, a hard disk, a CD-ROM, and a DVD, or a combination of storage media. Further, the storage 1540 may be the plural.

The connection unit 1570 is a device that connects the base station 1540 with the core network and other base stations, and may perform physical layer processing for message transmission and reception, and operations for transmitting messages to other base stations and receiving messages from other base stations.

Embodiments of the disclosure disclosed in this specification and drawings merely present specific examples in order to easily describe the technical contents of the disclosure and to help the understanding of the disclosure, and they are not intend to limit the scope of the disclosure. That is, it will be apparent to those of ordinary skill in the art to which the disclosure pertains that other modifications based on the technical spirit of the disclosure may be implemented. Further, each of the above embodiments may be operated in combination with each other, as needed.

**Claims**

1.  A method performed by a first node for measuring self-interference, the method comprising:

    acquiring a self-interference channel measurement configuration;
    transmitting a measurement signal for measuring self-interference based on the self-interference channel measurement configuration; and
    measuring the self-interference generated by the measurement signal for measuring the self-interference channel based on the self-interference channel measurement configuration.

2.  The method of claim 1, wherein the self-interference channel measurement configuration comprises at least one information of a time, a frequency resource, a self-interference measurement indication, a period, or a beam configuration for measuring the self-interference.

3. The method of claim 1, wherein the interference channel measurement configuration is received from a second node connected to a core network node.

4. The method of claim 1, further comprising:

transmitting a self-interference measurement indication request to a second node; and
receiving a self-interference measurement indication from the second node,
wherein the self-interference measurement indication request comprises at least one information of a time resource and a frequency resource, a self-interference measurement indication, a period, or a beam configuration for measuring the self-interference, and
wherein the self-interference measurement indication comprises at least one information of information included in the self-interference measurement indication request and information indicating approval of the self-interference measurement.

5. The method of claim 1, wherein the measurement signal comprises at least one of a channel state information-reference signal (CSI-RS), a demodulation reference signal (DMRS), a cell specific reference signal (CRS), a synchronization signal block (SSB), a physical downlink control channel (PDCCH), or a physical downlink shared channel (PDSCH).

6. The method of claim 1,

wherein the interference channel is measured per beam subset by classifying beam subsets of a beam set in operation in an interference measurement resource acquired through the self-interference measurement configuration, and
wherein a node providing the interference channel measurement configuration is configured to not use a time resource and a frequency resource indicated according to the interference channel measurement configuration for signal transmission or to transmit a signal in a range lower than a preconfigured threshold.

7. The method of claim 1, further comprising:

receiving a target signal; and
cancelling the self-interference from the target signal based on the self-interference measurement.

8. The method of claim 1, wherein the first node corresponds to an integrated access backhaul (IAB) node supporting full duplex communication.

9. A first node for measuring self-interference, the first node comprising:

a transceiver; and
a controller configured to control to acquire a self-interference channel measurement configuration, to transmit a measurement signal for self-interference measurement based on the self-interference channel measurement configuration, and to measure the self-interference generated by a measurement signal for self-interference channel measurement based on the self-interference channel measurement configuration.

10. The first node of claim 9, wherein the self-interference channel measurement configuration comprises at least one information of a time, a frequency resource, a self-interference measurement indication, a period, or a beam configuration for measuring the self-interference.

11. The first node of claim 9, wherein the interference channel measurement configuration is received from a second node connected to a core network node.

12. The first node of claim 9, wherein the controller is configured to control to transmit a self-interference measurement indication request to a second node and to receive a self-interference measurement indication from the second node,

wherein the self-interference measurement indication request comprises at least one information of a time resource and a frequency resource, a self-interference measurement indication, a period, or a beam configuration for measuring the self-interference, and
wherein the self-interference measurement indication comprises at least one information of information included in the self-interference measurement indication request and information indicating approval of the self-interference measurement.

13. The first node of claim 9, wherein the measurement signal comprises at least one of a channel state information-reference signal (CSI-RS), a demodulation reference signal (DMRS), a cell specific reference signal (CRS), a synchronization signal block (SSB), a physical downlink control channel (PDCCH), or a physical downlink shared channel (PDSCH), and
wherein the first node corresponds to an integrated access backhaul (IAB) node supporting full duplex communication.

14. The first node of claim 9,

wherein the interference channel is measured per beam subset by classifying beam subsets of a beam set in operation in an interference measurement resource acquired through the self-interference measurement configuration, and
wherein a node providing the interference channel measurement configuration is configured to not use a time resource and a frequency resource indicated according to the interference channel measurement configuration for signal transmission or to transmit a signal in a range lower than a preconfigured threshold.

15. The first node of claim 11, wherein the controller is configured to receive a target signal and to cancel the self-interference from the target signal based on the self-interference measurement.

# FIG. 1

RADIO FRAME (104)

SUBFRAME (103)

SLOT (102)

Resource element (106)

Resource block (107)

$N_{BW}$ SUBCARRIERS (105)

$N_{RB}$ SUBCARRIERS (108)

FREQUENCY

$N_{symb}$ OFDM SYMBOLS (101)

TIME

# FIG. 2

TTI

System bandwidth

PDCCH (201)

PDSCH (202)

CRS (203)

FREQUENCY

TIME

# FIG. 3

# FIG. 4

Control resource set duration
(404)

System band width (410)

Sub-band (403)

slot (420)

Frequency

Time

Control resource set #1 (401)

Control resource set #2 (402)

# FIG. 5

1 subcarrier with
subcarrier spacing $\varDelta$ f

1 RB =
12 subcarriers

1 Slot (or Subframe) =
14 OFDM symbols

PDCCH REs (501)

PDCCH REs (501)

PDSCH REs (503)

# FIG. 6A

Transmitter — 610

Self-interference cancellation unit — 620

Receiver — 630

FIG. 6B

Core Network

BS
(640)

BS or Small BS or Relay
(650)

UE
(660)

FIG. 7

IAB-donor
(700)

IAB-DU
(702)

720

724

722

IAB-MT
(704)

UE
(708)

IAB-Node
(706)

# FIG. 8

IAB-donor
(800)

DU-to-MT
Self-interference
(824)

IAB-DU
(802)

820

822

IAB-MT
(804)

IAB-Node
(806)

UE
(808)

FIG. 9

IAB-donor
(900)

MT-to-DU
Self-interference
(924)

IAB-DU
(902)

920

922

IAB-MT
(904)

UE
(908)

IAB-Node
(906)

# FIG. 10

UE
(1000)

IAB-node
(1002)

IAB-donor
(1004)

SI channel measurement configuration
- SI measurement time/freq. resource
- SI measurement indicator
(1020)

SI channel measurement indication requrest
- SI measurement time/freq. resource
(1022)

SI  channel measurement indication
- SI measurement  time/freq. resource
- SI measurement indicator
(1024)

1040

DU-to-MT
SI channel
measurement

1042

ZP-CSI-RS
or
Muting

SI transmission
(1026)

# FIG. 11

SI channel measurement configuration
- SI measurement time/freq. resource
- SI measurement indicator
(1120)

SI channel measurement indication requrest
- SI measurement time/freq. resource
(1122)

SI channel measurement configuration
- SI measurement time/freq. resource
- SI measurement indicator
(1126)

SI channel measurement indication
- SI measurement time/freq. resource
- SI measurement indicator
(1124)

SI channel measurement indication requrest
- SI measurement time/freq. resource
(1128)

SI channel measurement indication
- SI measurement time/freq. resource
- SI measurement indicator
(1130)

SI channel measurement config. report
- SI measurement time/freq. resource
(1132)

DU-to-MT
SI channel
measurement
1135

ZP-CSI-RS
Or
Muting
1139

SI transmission
(1134)

DU-to-MT
SI channel
measurement
1145

ZP-CSI-RS
Or
Muting
1141

ZP-CSI-RS
Or
Muting
1140

1143

SI transmission

UE
(1100)

IAB-node
(1102)

IAB-node
(1104)

IAB-donor
(1106)

EP 4 164 147 A1

# FIG. 12

IAB-node
(1200)

IAB-donor
(1202)

IAB-node
(1204)

UE
(1206)

SI channel measurement configuration
- SI measurement time/freq. resource
- SI measurement indicator
(1220)

SI channel measurement indication requrest
- SI measurement time/freq. resource
(1222)

SI channel measurement indication
- SI measurement time/freq. resource
- SI measurement indicator
(1224)

Resource muting
- Muted time/freq. resource
(1226)

1242

Resource
Muting

1240

1242

DU-to-MT
SI channel
measurement

SI transmission

EP 4 164 147 A1

# FIG. 13

IAB-node (1300)    IAB-node (1302)    IAB-node (1304)    UE (1306)

SI channel measurement announcement
- SI measurement time/freq. resource
- SI measurement beam configuration
(1320)

Permission message
- Allow/Deny indicator
- BS ID
- SI measurement time/freq. resource
- SI measurement beam configuration
(1322)

(1342) Resource Muting

(1340) AU-to-MT SI channel measurement

SI transmission

EP 4 164 147 A1

# FIG. 14

```
                    ┌─────────────┐
                    │    Start    │
                    └──────┬──────┘
                           │
                           ▼
        ┌──────────────────────────────────┐  1410
        │  Acquire self-interference channel │
        │     measurement configuration      │
        └──────────────────┬─────────────────┘
                           │
                           ▼
        ┌──────────────────────────────────┐  1420
        │     Transmit measurement signal for │
        │  measuring self-interference channel │
        └──────────────────┬─────────────────┘
                           │
                           ▼
        ┌──────────────────────────────────┐  1430
        │        Measure self-interference    │
        └──────────────────┬─────────────────┘
                           │
                           ▼
        ┌──────────────────────────────────┐  1440
        │       Transmit and receive signal   │
        └──────────────────┬─────────────────┘
                           │
                           ▼
        ┌──────────────────────────────────┐  1450
        │        Cancel self-interference     │
        └──────────────────┬─────────────────┘
                           │
                           ▼
                    ┌─────────────┐
                    │     End     │
                    └─────────────┘
```

# FIG. 15

1500

1530       1520       1510

| Storage | Controller | Transceiver |

UE

1540

1550       1560       1570

| Transceiver | Controller | Connection unit |

1580

| Connection unit |

Base station

| INTERNATIONAL SEARCH REPORT | International application No. |
|---|---|
| | **PCT/KR2021/008636** |

**A.  CLASSIFICATION OF SUBJECT MATTER**

**H04B 17/345**(2014.01)i; **H04L 5/00**(2006.01)i; **H04W 92/20**(2009.01)i; **H04W 84/04**(2009.01)i

According to International Patent Classification (IPC) or to both national classification and IPC

**B.  FIELDS SEARCHED**

Minimum documentation searched (classification system followed by classification symbols)

H04B 17/345(2014.01); H04W 16/28(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: IAB 노드(node), 자기 간섭(self-interference), 채널(channel) 측정(measurement), 설정(configuration), 전이중통신(Full Duplex)

**C.  DOCUMENTS CONSIDERED TO BE RELEVANT**

| Category* | Citation of document, with indication, where appropriate, of the relevant passages | Relevant to claim No. |
|---|---|---|
| X<br>Y<br>A | CATT. NR Physical Layer design for IAB backhaul link. R1-1808398, 3GPP TSG RAN WG1 #94. Gothenburg, Sweden. 11 August 2018.<br>    See pages 1-8. | 1-3,5,7,9-11,15<br>8,13<br>4,6,12,14 |
| Y | US 2019-0021084 A1 (FUTUREWEI TECHNOLOGIES, INC.) 17 January 2019 (2019-01-17)<br>    See paragraphs [0074]-[0079], [0082]-[0087] and [0113]-[0120] and figure 3. | 8,13 |
| A | GEE, Yong Suk et al. Full Duplex Integrated Access and Backhaul for 5G NR: Analyses and Prototype Measurements. arXiv:2007.03272v1 [eess.SP]. pp. 1-8, July 2020.<br>    See pages 1-7. | 1-15 |
| A | QUALCOMM INCORPORATED. IAB resource management framework. R1-1900881, 3GPP TSG RAN WG1 #AH. Taipei, Taiwan. 12 January 2019.<br>    See pages 1-8. | 1-15 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 September 2021** | **17 September 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/008636** |

**C.    DOCUMENTS CONSIDERED TO BE RELEVANT**

| Category* | Citation of document, with indication, where appropriate, of the relevant passages | Relevant to claim No. |
| --- | --- | --- |
| A | ERICSSON. Duplexing in IAB. R2-1801024, 3GPP TSG RAN WG2 #AH. Vancouver, Canada. 12 January 2018.<br>    See pages 1-6. | 1-15 |

Form PCT/ISA/210 (second sheet) (July 2019)

<div align="center">

**INTERNATIONAL SEARCH REPORT**
**Information on patent family members**

</div>

| International application No. |
|---|
| **PCT/KR2021/008636** |

| Patent document cited in search report | | | Publication date (day/month/year) | Patent family member(s) | | | Publication date (day/month/year) |
|---|---|---|---|---|---|---|---|
| US | 2019-0021084 | A1 | 17 January 2019 | CN | 110915282 | A | 24 March 2020 |
| | | | | EP | 3626011 | A1 | 25 March 2020 |
| | | | | EP | 3626011 | A4 | 13 May 2020 |
| | | | | US | 10912085 | B2 | 02 February 2021 |
| | | | | US | 2019-0306858 | A1 | 03 October 2019 |
| | | | | WO | 2019-011259 | A1 | 17 January 2019 |

Form PCT/ISA/210 (patent family annex) (July 2019)